# EUROPEAN PATENT APPLICATION

(11) **EP 2 629 455 A2**
(43) Date of publication of application: **21.08.2013**
(21) Application number: 13154864.6
(22) Date of filing: 12.02.2013
(51) Int. Cl.: H04L 12/24, H04W 4/00

(54) **Method, computer program, communication device of handling triggered trap management object**

(30) Priority: 15.02.2012 US 201261598914 P; 08.02.2013 US 201313762404
(71) Applicant: HTC Corporation, Taoyuan County 330 (TW)
(72) Inventor: Yu, Chun-Ta, 330 Taoyuan (TW); Tseng, Yin-Yeh, 330 Taoyuan (TW)
(74) Representative: Konkonen, Tomi-Matti Juhani

(57) **Abstract**

A method of handling triggered trap management object of a client in a service system supporting open mobile alliance (OMA) device management is disclosed. The method comprises creating a node in a trap management object for storing a predefined value of time interval; and transmitting a notification associated to a triggered trap to a server of the service system or invoking a management object of the client associated to the triggered trap, only when a time interval between a triggered trap and a preceding triggered trap is greater than or equal to the predefined value stored in the node.

## Description

### Background

### 1. Field

The embodiment of the present invention relates to a method, a computer program product and a communication device used in a service system, and more particularly, to a method, a computer program product and a communication device of handling triggered trap management object in the service system.

### 2. Description of the Prior Art

The Open Mobile Alliance (OMA) is founded to develop OMA specifications for mobile services to meet users' needs. Furthermore, the OMA specifications aim to provide the mobile services which are interoperable across geographic areas (e.g. countries), operators, service providers, networks, operation systems and mobile devices. In detail, the mobile services conforming to the OMA specifications can be used by the users without restriction to particular operators and service providers. The mobile services conforming to the OMA specifications are also bearer agnostic, i.e., the bearer that carries the mobile services can be a second generation (2G) mobile system such as GSM, EDGE or GPRS, or a third generation (3G) and beyond mobile system such as UMTS, LTE or LTE-Advanced. Further, the mobile services can be executed on an operation system such as Windows, Android or Linux operated on various mobile devices. Therefore, industries providing devices or the mobile services supporting the OMA specifications can benefit from a largely growing market enabled by interoperability of the mobile services. Besides, the users use the devices or the mobile services supporting the OMA specifications can also have a better experience due to the interoperability of the mobile services.

In OMA Device Management (DM) requirement, a Management Authority (MA) is defined as an authorized legal entity which can manage one or more DM clients (e.g. mobile devices) by using a DM protocol conforming to the OMA specifications. Furthermore, according to deployment of a system supporting the OMA, the MA may directly manage the DM client, or the MA may manage the DM client via one or multiple DM servers, i.e., the DM client is actually managed by the one or the multiple DM servers. In detail, the DM protocol defines a way according to which a packet or a message is exchanged between the DM server and the DM client. The DM protocol also defines a way according to which the DM client can feedback a command, a status or a report to the DM server. Further, when using the DM protocol, the DM server manages the DM client through a set of management objects in the DM client. Management objects are logical collections of related nodes that enable the targeting of management operations. Each node in a management object may be small as an integer or large and complex like a background picture or screen saver.

Diagnostics and Monitoring management object is defined to manage distributed, mobile wireless devices, in order to diagnose and monitor the states in the device. In addition, trap framework and management objects as a part of the framework to be employed in a Diagnostics and Monitoring activity that leverages the OMA DM. It provides standard DM management objects and associated client-side and server-side behavior necessary to utilize the event monitoring capabilities on the mobile devices. The trap framework provides the common structure of the trap management object on which further definitions for the specific events by vendors and standard bodies will be based, and also provides the trap mechanisms for sending and receiving notifications about the events. In particular, a trap management object is used to report the occurrence of an event of interest. A trap is associated with a trap identifier and a server identifier. It also defines a collection method and a reference node to refer to other management objects or URI.

Note that, if a device supports a trap, it means the device is capable of monitoring the event and sending notifications whenever it detects the event. If the MA wants to use the capability, it has to register for it. The trap has two events being monitored - when the trap becomes active and when the trap becomes inactive. Moreover, the trap framework supports multiple trap recipients. Therefore, it must be possible that more than one server can register on one trap at the same time with the maximum allowed number limited by the vendors based on the occurrence framework property of the trap node. In this case, the order in which the device sends the notifications for each server should be decided at the discretion of the vendors.

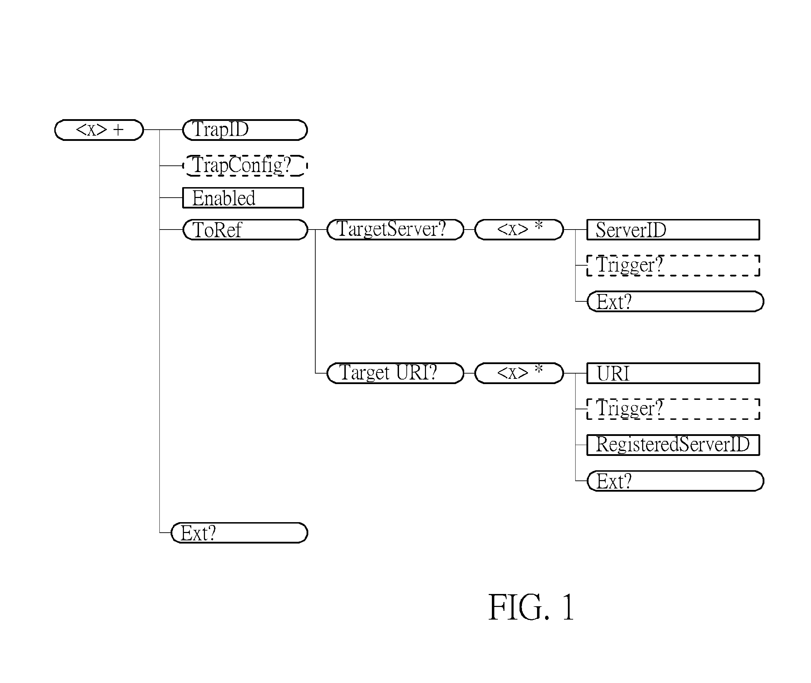

Please refer to Fig. 1, which is a schematic diagram of a trap framework according to the prior art. The leaf node "TrapId" is used to define a unique identifier that identifies a trap management object. The interior node "TrapConfig" is a placeholder for the configuration information associated with the trap management object. The node "Enabled" is used to indicate if the trap is enabled or disabled. If the trap is disabled, no action related to the trap is performed. The interior node "ToRef" is a placeholder for all recipient reference. The interior node "Target Server" is a placeholder for specifying a target server as a trap recipient. The interior node ToRef/TargetServer/<x> is a placeholder for each registration for outward notification. The leaf node "Server ID" specifies a server identifier of a registered DM Server. The interior node "Trigger" indicates when to send notification to this particular server. If this node is missing, it has the same effect as Active. The interior node "Target URI" indicates the target internal executable node as a trap recipient. The interior node ToRef/Target URI/<x> is a placeholder for each registration for inward notification. The leaf node "URI" specifies the device internal target URI reference which is invoked by trap. The leaf node "Registered Server ID" specifies the server identifier of the DM Server that registered the inward trap.

However, the applicant notices a problem associated to the notification of a trap management object. A device, which supports a trap management object, can monitor an event and send notification when it detects the event. Currently a notification is sent when the trap becomes active or when the Trap becomes inactive or both. However, there is a defect for this mechanism when the trap-triggering condition is not well-designed. Too many traps will be triggered and too many notifications will be sent if the monitored parameter frequently rises above and drops below a server-specific parameter. For example, a received power trap is configured in a device to monitor the received power, and a notification can be sent to a server when the received power is below -80dBm. When the received power is close to -80 dBm, too many traps may be triggered if the received power rises above and drops below -80 dBm frequently. The device may cost much power to send the notification and even cost too much money if the device is roaming. Also, it will flood the network due to too many notifications are sent.

### Summary

The disclosure therefore provides a method, a computer program and a communication device for handling triggered trap management object. This object can be solved by the features of the independent claims. Other embodiments are characterised by the dependent claims.

A method of handling triggered trap management object of a client in a service system supporting open mobile alliance (OMA) device management is disclosed. The method comprises creating a node in a trap management object for storing a predefined value of time interval, and transmitting a notification associated to a triggered trap to a server of the service system or invoking a management object of the client associated to the triggered trap, only when a time interval between a triggered trap and a preceding triggered trap is greater or equal to the predefined value stored in the node.

A method of handling triggered trap management object of a client in a service system supporting open mobile alliance (OMA) device management is disclosed. The method comprises creating a node in a trap management object for storing predefined number of times of a trap triggering, and transmitting a notification associated to a triggered trap to a server of the service system or invoking a management object of the client associated to the triggered trap, only when an accumulated number of times of trap triggering reaches predefined number of times stored in the nodes.

A method of handling triggered trap management object of a client in a service system supporting open mobile alliance (OMA) device management is disclosed. The method comprises creating a node in a trap management object for storing a predefined condition of a network connection, and transmitting a notification associated to a triggered trap to the server or invoking a management object of the client associated to the triggered trap, only when a current condition of the network connection is conformed to the predefined condition of network connection stored in the node.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a trap framework according to the prior art.

Fig. 2 is a schematic diagram of an exemplary service system according to the present disclosure.

Fig. 3 is a schematic diagram of an exemplary communication device according to the present disclosure.

Fig. 4 is a flowchart of exemplary processes according to the present disclosure.

Fig. 5 is a schematic diagram of a trap framework according to the present disclosure.

Figs. 6-7 are flowcharts of exemplary processes according to the present disclosure.

### Detailed Description

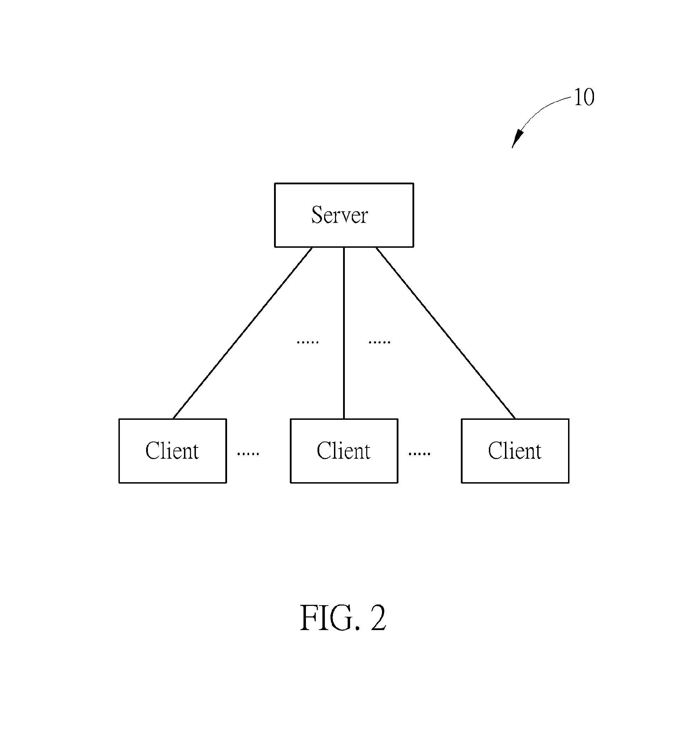

Please refer to Fig. 2, which is a schematic diagram of a service system 10 according to an example of the present disclosure. The service system 10 supports an Open Mobile Alliance (OMA) Device Management (DM) protocol and is briefly composed of a DM server (hereafter server for short)and a plurality of DM clients (hereafter clients for short). Further, there is a number of management objects (i.e. a trap management object) defined in the client. A client supporting a trap is capable of monitoring an event, sending a notification, or invoking other management objects, whenever it detects the event.

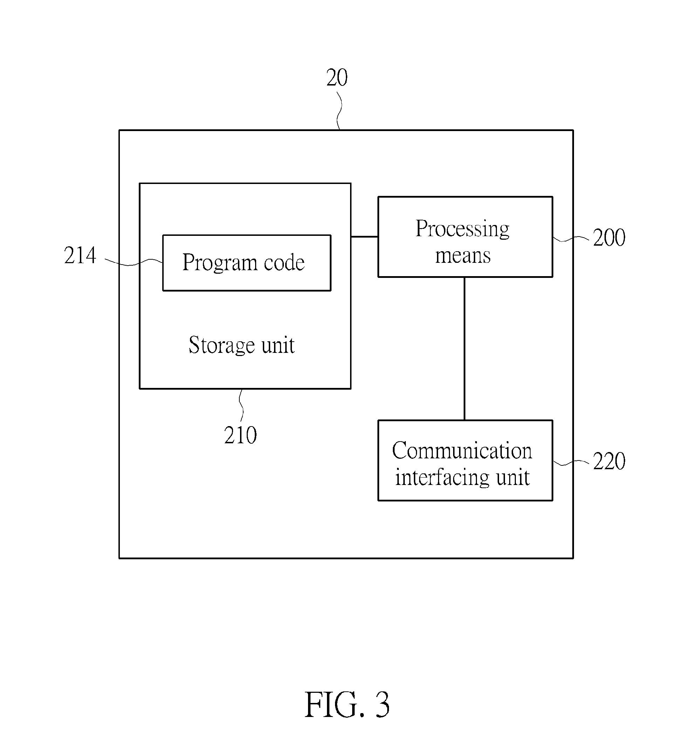

Please refer to Fig. 3, which is a schematic diagram of a communication device 20 according to an example of the present disclosure. The communication device 20 can be the client or the server shown in Fig. 2, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store a program code 214, accessed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a transceiver and can exchange signals with the server according to processing results of the processing means 200.

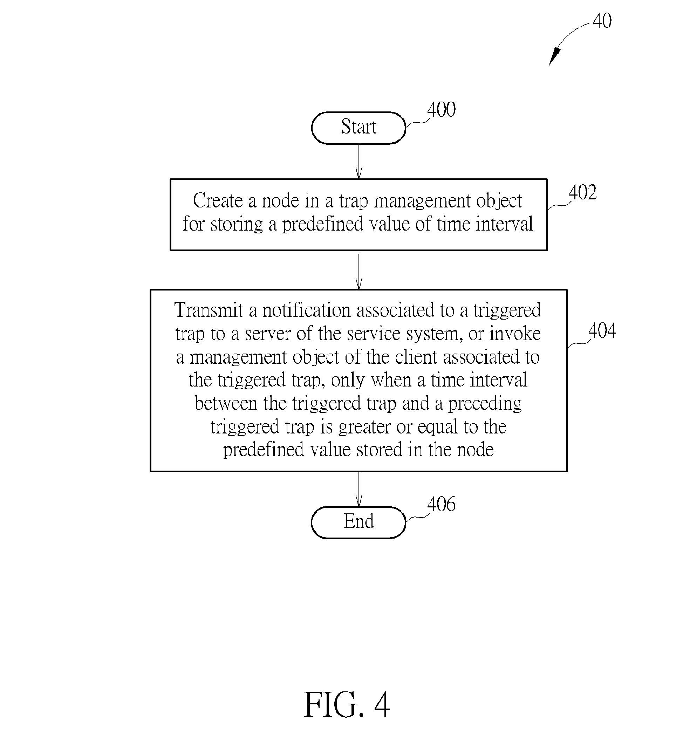

Please refer to Fig. 4, which is a flowchart of a process 40 according to an example of the present disclosure. The process 40 is utilized in a client for handling triggered trap management object, so as to avoid frequently sending the notifications or frequently invoking other management objects of the client, thereby saving the power of the client. The process 40 may be compiled into the program code 214 and includes the following steps:

Step 400: Start.

Step 402: Create a node in a trap management object for storing a predefined value of time interval.

Step 404: Transmit a notification associated to a triggered trap to a server of the service system, or invoke a management object of the client associated to the triggered trap, only when a time interval between the triggered trap and a preceding triggered trap is greater or equal to the predefined value stored in the node.

Step 406: End.

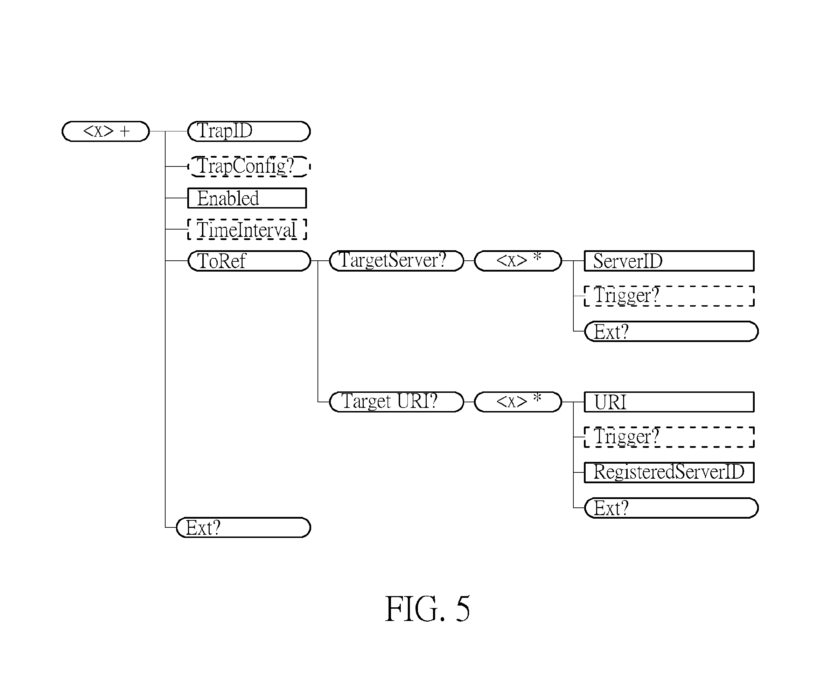

According to the process 40, a node is created in a trap management object of the client, for storing a predefined value of time interval. Please refer to Fig. 5, which is a schematic diagram of a trap framework according to the present disclosure. Compared to the conventional trap framework of Fig. 1, a new leaf node "TimeInterval" is added and a predefined value of time interval is stored in this leaf node.

According to Step 404, only when a time interval between two adjacent triggered traps, i.e. a current triggered trap and a preceding triggered trap is greater than or equal to the predefined value stored in the node, the client sends a notification associated with the current triggered trap to the server or invokes other management objects of the client. For example, the predefined value is set to 30 seconds. In other words, the client is allowed to send the notification to the server when the time interval between a current triggered trap and a preceding triggered trap is more than 30 seconds so that the time interval between two adjacent notifications can be also more than 30 seconds, which alleviates the burden on power consumption due to frequently sending notification to the server (caused by the unstable received power which rises above and drops below frequently, for example).

In addition, when the time interval between a current triggered trap and a preceding triggered trap is less than the predefined value stored in the node, the client ignores the triggered trap and does not send a notification associated with the current triggered trap to the server, or does not invoke other management objects of the client. Alternatively, if the time interval between a current triggered trap and a preceding triggered trap is less than the predefined value stored in the node, the client postpones transmitting the notification to the next available time for the client to send the notification to the server, or postpones invoking other management objects of the client.

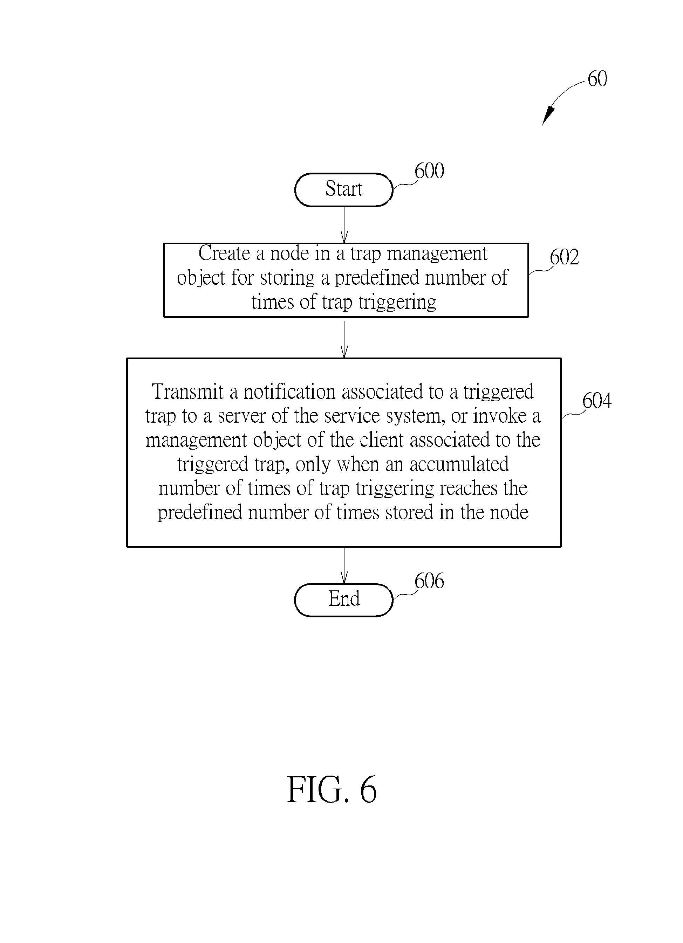

Please refer to Fig. 6, which is a flowchart of a process 60 according to an example of the present disclosure. The process 60 is utilized in a client for handling triggered trap management object, so as to avoid frequently sending the notifications or frequently invoking other management object of the client, thereby saving the power of the client. The process 60 may be compiled into the program code 214 and includes the following steps:

Step 600: Start.

Step 602: Create a node in a trap management object for storing a predefined number of times of trap triggering.

Step 604: Transmit a notification associated to a triggered trap to a server of the service system, or invoke a management object of the client associated to the triggered trap, only when an accumulated number of times of trap triggering reaches the predefined number of times stored in the node.

Step 606: End.

According to the process 60, a node is created in a trap management object for storing a predefined number, which indicates the least accumulated number of times of trap triggering that allows the client to send a notification. Only when an accumulated number of times of trap triggering reaches the predefined number of times stored in the node, the client sends a notification to the server or invokes other management objects of the client, and the client then sets the accumulated number of times to zero. For example, if the predefined number of times is 10, for every 10 traps triggered, the client sends a notification to the server.

In another embodiment of the present invention, the process 60 can be performed plus using one additional node for storing a predefined value of a time interval during which the total number of times of trap triggering is accumulated. Therefore, the client can send a notification to the server only when, for example, the accumulated number of times of trap triggering reaches 10 times during 2 seconds.

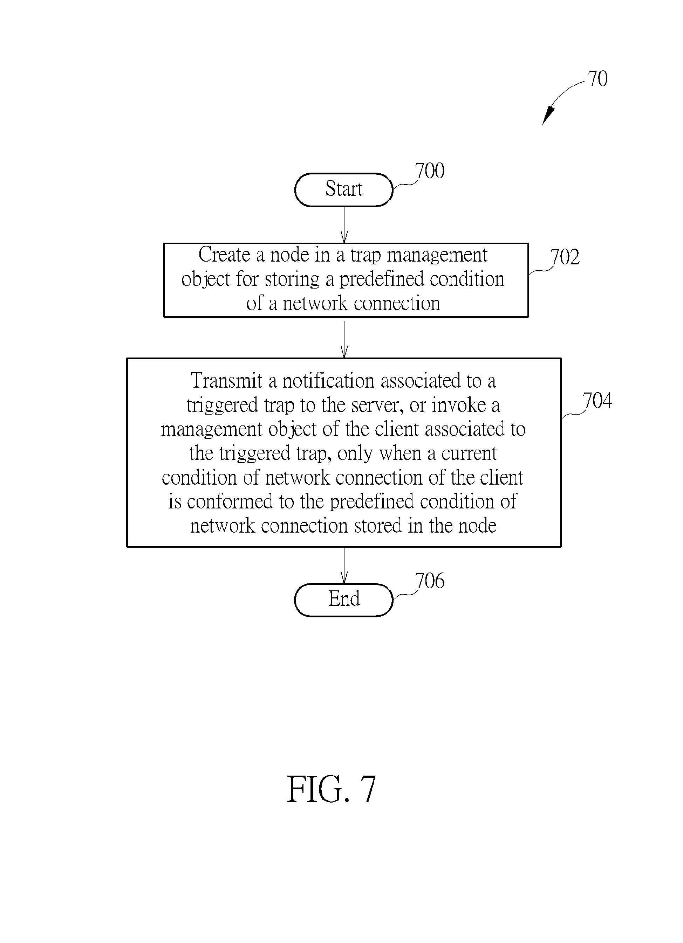

Please refer to Fig. 7, which is a flowchart of a process 70 according to an example of the present disclosure. The process 70 is utilized in a client for handling triggered trap management object, so as to avoid frequently sending the notifications or invoking other management object of the client, thereby saving the power of the client. The process 70 may be compiled into the program code 214 and includes the following steps:

Step 700: Start.

Step 702: Create a node in a trap management object for storing a predefined condition of a network connection.

Step 704: Transmit a notification associated to a triggered trap to the server, or invoke a management object of the client associated to the triggered trap, only when a current condition of network connection of the client is conformed to the predefined condition of network connection stored in the node.

Step 706: End.

According to the process 70, a node is created in a trap management object of the client, for storing a predefined condition of a specific network connection. The client sends a notification to the server or invokes a management object of the client only when the current condition of the specific network connection of the client is conformed to the predefined condition stored in the node. For example, the client is allowed to send the notification to the server only when the client has turned on WiFi connection, wherein the specific network connection is WiFi and predefined condition is "ON". In another embodiment, the predefined condition of the specific network connection can simply indicate the client supports wifi function or not.

On the other hand, if the trap is triggered and the condition of network connection of the client is not conformed to the predefined condition set in the node, the client ignores the triggered trap; otherwise, the client postpones transmitting the notification associated to the triggered trap or postpones invoking other management objects of the client until the condition of the network connection is conformed to the predefined condition set in the node.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the communication device 20.

In conclusion, methods of handling triggered trap management object are provided to avoid frequent notification or frequently invoking management object of the client, thereby saving the power of the client.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling triggered trap management object of a client in a service system supporting open mobile alliance (OMA) device management (DM), the method comprising:
creating a node in a trap management object for storing a predefined value of time interval; and
transmitting a notification associated to a triggered trap to a server of the service system or invoking a management object of the client associated to the triggered trap,
only when a time interval between a triggered trap and a preceding triggered trap is greater or equal to the predefined value stored in the node.

2. The method of claim 1, further comprising:
ignoring the triggered trap when the time interval between the triggered trap and the preceding triggered trap is less than the predefined value stored in the node.

3. The method of claim 1, further comprising:
postponing transmitting the notification or postponing invoking the management object, when the time interval between the triggered trap and the preceding triggered trap is less than the predefined value stored in the node.

4. A method of handling triggered trap management object of a client in a service system supporting open mobile alliance (OMA) device management (DM), the method comprising:
creating a node in a trap management object for storing predefined number of times of a trap triggering; and
transmitting a notification associated to a triggered trap to a server of the service system or invoking a management object of the client associated to the triggered trap,
only when an accumulated number of times of trap triggering reaches predefined number of times stored in the nodes.

5. The method of claim 4, further comprising:
resetting the number of times of trap triggering after transmitting the notification or invoking the management object.

6. A method of handling triggered trap management object of a client in a service system supporting open mobile alliance (OMA) device management (DM), the method comprising:
creating a node in a trap management object for storing a predefined condition of a network connection; and
transmitting a notification associated to a triggered trap to the server or invoking a management object of the client associated to the triggered trap, only when a current condition of the network connection is conformed to the predefined condition of network connection stored in the node.

7. The method of claim 6, further comprising:
ignoring the triggered trap, when the condition of network connection is not confirmed to the predefined condition of the network connection stored in the node.

8. The method of claim 6, further comprising:
postponing transmitting the notification or postponing invoking the management object, when the condition of the network connection of the client is not conformed to the predefined condition of the network connection stored in the node.

9. A computer program product, comprising a set of programmable means configured to perform the steps of the method of any preceding claim 1-8.

10. A communication device, comprising:
a processing means;
a storage unit, wherein the storage unit comprises:
the computer program product of claim 9 and the steps of the method of any preceding claim 1-8 are configured to be compiled into the computer program product when executed by the processing means; or
hardware or firmware means configured to perform the steps of the method of any preceding claim 1-8 when executed.
